# FASCICULE DE BREVET EUROPEEN

(11) **EP 1 627 233 B1**
(45) Date de publication et mention de la délivrance du brevet: **17.11.2010**
(21) Numéro de dépôt: 04742872.7
(22) Date de dépôt: 19.05.2004
(51) Int. Cl.: G01N 35/02

(54) **SYSTEME DE CONTROLE DE LA TEMPERATURE AU SEIN D'UN AUTOMATE D'ANALYSE BIOLOGIQUE**
SYSTEM ZUR TEMPERATURKONTROLLE IN EINEM BIOLOGISCHEN ANALYSEAUTOMATEN
SYSTEM FOR TEMPERATURE CONTROL WITHIN AN AUTOMATIC BIOLOGICAL ANALYSER

(30) Priorité: 28.05.2003 FR 0306477
(43) Date de publication de la demande: 22.02.2006
(73) Titulaire: BIOMERIEUX, 69280 Marcy-L'Etoile (FR)
(72) Inventeur: BIANCALANI, Maurizio, I-Calenzano (IT); ALUNNI, Giovanni, I-Firenze (IT); RICCI, Gabriele, I-Monte San Savino (IT)
(86) Numéro de dépôt international: PCT/FR2004/050202
(87) Numéro de publication internationale: WO 2004/109294

(56) Documents cités:
- EP-A- 0 837 331
- EP-A- 0 864 866
- EP-A- 1 102 068
- WO-A-96/14582
- US-A- 4 647 432
- US-A- 4 774 055
- US-A- 5 133 936
- US-A- 5 171 531
- US-A1- 2003 053 933

## Description

L'invention concerne un appareil de dosage immunologique de différentes substances dans des échantillons biologiques, permettant une automatisation des méthodes de dosage du type ELISA, RIA, FIA, LIA, FPIA, CLIA, etc. Plus précisément, l'invention concerne un système de contrôle de la température des réactifs de dosage au sein dudit appareil de dosage.

Des appareils de ce type sont déjà décrits dans les demandes WO-A-91/07662 et WO-A-96/14582, appartenant à la Demanderesse, auxquelles on peut se reporter pour une description des dosages réalisés, ces appareils connus comprenant pour l'essentiel des moyens de support, de guidage et de déplacement pas à pas de cuvettes de réaction sur un trajet comprenant un nombre prédéterminé de positions, un plateau tournant de support d'échantillons à analyser, un plateau tournant de support de réactifs, des moyens de prélèvement de quantités déterminées d'échantillons et de réactifs et d'injection de ces prélèvements dans les cuvettes de réaction, des moyens de lavage des cuvettes, des moyens de lecture optique des résultats de dosage et un système informatique de commande permettant l'exécution de cycles d'analyse préalablement programmés, correspondant à des dosages du type monoréactif ou bi-réactif, ces appareils connus ayant une cadence de fonctionnement de l'ordre de 120 dosages par heure pour le premier d'entre eux et de 360 dosages par heure pour le second.

Néanmoins dans ces appareils de dosage immunologique, rien n'est prévu pour le maintien du plateau tournant de support des réactifs de dosage, à une température suffisamment basse pour être compatible avec la conservation de ces derniers, afin de s'assurer du maintien des conditions optimales de réactions.

*La demande de brevet* EP-A-0 864 866 *concerne un automate qui s'apparente à celui pour lequel le système de contrôle de la température de la présente invention est adapté. Le chemin de transfert d'air y est très important. Pour maintenir la température à une valeur idoine, il est préconisé d'utiliser une unité de refroidissement de l'air qui procure de l'air refroidi forcé dans un logement, tel qu'un capot (voir à ce propos les figures 29 et 30 et la description page 9 lignes 8 à 10)*.

Une telle solution est peu appropriée à un chemin de transfert d'air assez long, puisque la différence de température entre l'entrée de l'air frais et la sortie de l'air chaud est assez importante. Ce gradient de température est bien entendu nuisible aux résultats biologiques qui pourront être obtenus par l'automate.

D'autres systèmes de contrôle de la température sont décrits dans les documents US 5171531, US 4774055, US 5133936, US 4647432 et EP 1102068.

Eu égard à cet état de la technique, un des objectifs majeurs de la présente invention, est de proposer un système permettant de contrôler et de maintenir la température des réactifs, utilisés dans un automate d'analyse, a une valeur constante et ce quelle que soit la position des réactifs et tout au long de l'analyse.

Un autre objectif majeur de la présente invention est de proposer un système permettant le contrôle de la température des réactifs, contenus dans des récipients ouverts, basé sur la circulation d'air réfrigéré, qui n'entraîne pas l'évaporation des réactifs.

Conformément à la présente invention, il est proposé un système de contrôle de la température au sein d'un automate d'analyse biologique qui permet d'atteindre les objectifs susmentionnés.

A cet effet, la présente invention concerne donc un système de contrôle de la température au sein d'un automate d'analyse biologique, l'automate comprenant pour l'essentiel :
- des moyens de support, de guidage et de déplacement pas à pas de cuvettes de réaction sur un trajet comprenant un nombre prédéterminé de positions,
- un plateau tournant de support d'échantillons à analyser,
- un plateau tournant de support de réactifs, des moyens de prélèvement de quantités déterminées d'échantillons et de réactifs et d'injection de ces prélèvements dans les cuvettes de réaction,
- des moyens de lavage des cuvettes,
- des moyens de lecture optique des résultats de dosage et un système informatique de commande permettant l'exécution de cycles d'analyse préalablement programmés,
ledit système de contrôle de la température étant caractérisé par le fait qu'il est associé à la partie inférieure du plateau tournant de support de réactifs de dosage, ledit système comprenant en son sein :
- au moins un déflecteur d'entrée d'air,
- au moins un déflecteur de sortie d'air,
- un chemin circulaire de transfert d'air positionné entre le déflecteur d'entrée et le déflecteur de sortie, et
- des moyens générant de l'air forcé au niveau du chemin circulaire,
ce qui permet de réduire la variation thermique entre les températures d'entrée et de sortie de l'air au sein du système de contrôle de la température.

Dans un mode préférentiel de réalisation, le système est formé par un capot de forme sensiblement annulaire avec une section en forme de U.

Dans un mode préférentiel de réalisation, le système est formé par un capot qui possède une paroi verticale extérieure, une paroi verticale intérieure et une paroi horizontale inférieure, la face supérieure de la paroi horizontale étant sensiblement plane.

Selon ce dernier mode de réalisation, la paroi horizontale est percée d'au moins deux ouvertures situées à sensiblement 180° l'une de l'autre le long du chemin circulaire de transfert d'air, et les déflecteurs d'air sont disposés sur la face supérieure de ladite paroi horizontale au niveau desdites ouvertures.

Dans tous les cas de figure ci-dessus, il est intéressant que chaque déflecteur d'air soit constitué d'une plaque supérieure et d'au moins une entretoise reliant la paroi horizontale à ladite plaque.

De plus, la plaque supérieure peut être sensiblement parallèle à la face supérieure de la paroi horizontale.

Toujours selon tous les cas de figure ci-dessus, la partie inférieure du plateau tournant de support de réactifs de dosage est ajourée et s'étend au sein du système de contrôle de la température.

Préférentiellement, les réactifs de dosage contenus dans des contenants, tels que des bouteilles ou des flacons, ne sont présents qu'au niveau des jours du plateau tournant ajouré.

Les figures ci-jointes sont données à titre d'exemple explicatif et n'ont aucun caractère limitatif. Elles permettront de mieux comprendre l'invention.

La figure 1 représente une vue en perspective en élévation d'un système de contrôle de la température démonté par rapport à l'automate d'analyse biologique auquel il est normalement destiné.

La figure 2 représente une coupe transversale selon A-A de la figure 1.

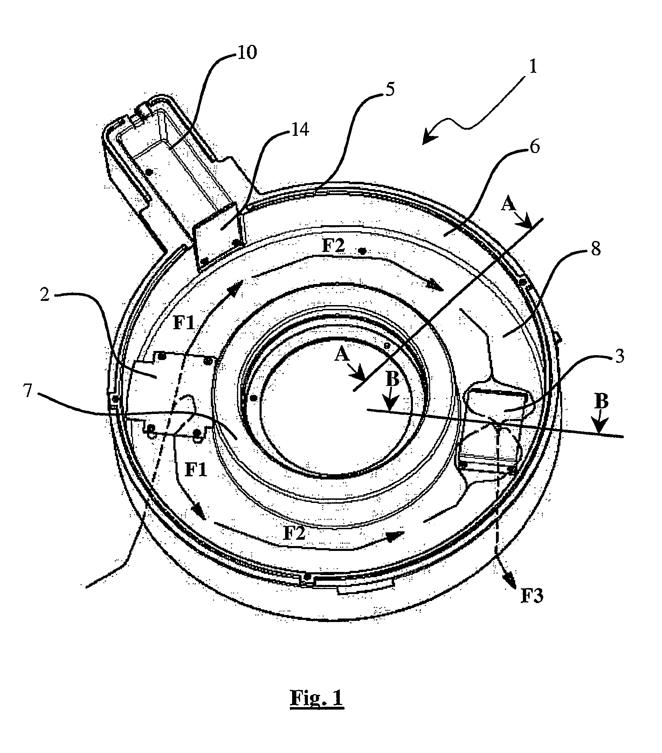

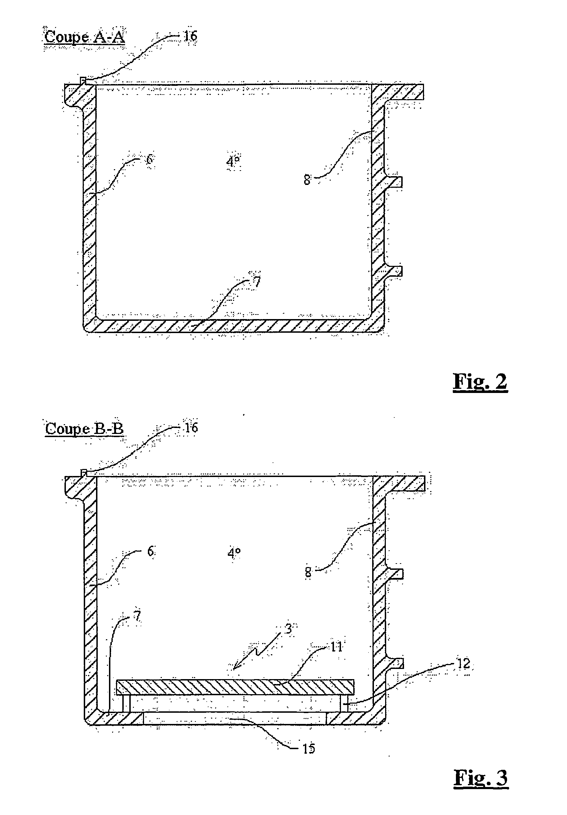

Enfin, la figure 3 représente une coupe transversale selon B-B de la figure 1 au niveau du déflecteur de sortie d'air.

Le système de contrôle de la température est positionné au sein d'un automate d'analyse biologique. Cet automate est bien décrit dans la demande EP-A-0 837 331 à laquelle il sera possible de se référer pour plus d'informations sur les contextes technique et structurel dans lesquels ledit système de contrôle est implanté. La structure générale de cet automate comprend un châssis sur lequel sont montés un plateau tournant de support d'échantillons à analyser, un plateau tournant de support de réactifs de dosage, des moyens de prélèvement d'une quantité déterminée d'échantillons et d'une quantité déterminée de réactifs respectivement et de dépôt de ces quantités prélevées dans une cuvette de réaction, ces moyens étant du même type que ceux qui ont été décrits dans la demande WO-A-96/14582.

Les réactifs utilisés sont du type à billes magnétiques et l'appareil selon l'invention comprend des moyens de lavage ou de rinçage de ces billes magnétiques, qui sont du même type que ceux déjà décrits dans les demandes internationales précitées et qui comprennent des aiguilles d'aspiration et d'injection de liquide, à déplacement vertical, et des aimants permanents disposés de chaque côté du trajet des cuvettes de réaction pour attirer, par attraction magnétique, les billes magnétiques des réactifs et les fixer temporairement sur les parois des cuvettes de réaction. Les moyens de lavage comprennent également une aiguille de dépôt d'un substrat dans les cuvettes de réaction, agencée immédiatement en aval des aiguilles d'injection et d'aspiration de liquide de lavage.

Les moyens de lecture optique des résultats de dosage, du même type que ceux déjà décrits dans la demande WO-A-00/16075, sont agencés sur le châssis au voisinage des moyens d'injection et de lavage. Ils fonctionnent en luminescence.

L'appareil selon l'invention comprend encore des moyens de déplacement d'ensembles de cuvettes de réaction sur un trajet de forme rectangulaire, à une extrémité duquel sont prévus des moyens d'alimentation automatique en ensembles de cuvettes de réaction et d'éjection de ces cuvettes.

Dans cet appareil, un ensemble de cuvettes de réaction amené dans la position d'alimentation doit effectuer deux fois le trajet rectangulaire complet pour un dosage monoréactif, et trois fois dans le cas d'un dosage bi-réactif, avant d'être éjecté. L'appareil selon l'invention peut, dans les mêmes conditions que celles décrites dans la demande WO-A-96/14582, fonctionner à une cadence de 120 dosages par heure, de façon entièrement automatique.

La présente invention concerne un système de contrôle de la température, qui est implanté en dessous du plateau tournant de support de réactifs de dosage, non représenté sur les figures. Bien entendu, il est possible d'envisager que le système de contrôle de la température soit également présent au niveau du plateau tournant de support d'échantillons à analyser ou de tout autre liquide présent dans l'automate d'analyses biologiques.

Comme cela est représenté à la figure 1, le système de contrôle de la température est constitué d'un capot 1 permettant d'isoler les flux d'air qui vont parcourir le dessous du plateau supportant les réactifs de dosage.

Ce capot 1 comprend en outre un certain nombre de parois formant ensemble un anneau au centre duquel est présent une ouverture centrale 9. Structurellement, l'ouverture centrale 9 permet notamment le passage d'un axe de rotation par exemple pour le plateau présent au dessus du capot 1 ou de tout système d'entraînement dudit plateau. Cette forme annulaire est réalisée par l'assemblage d'une paroi verticale extérieure 6, d'une paroi verticale à l'intérieur 7, reliée l'une à l'autre par une paroi horizontale inférieure 8. Il est tout à fait possible d'avoir une forme qui soit différente pour minimiser les angles où l'air et donc la température ne pourront pas aisément être adapter ou contrôler.

Sur le pourtour de ce capot 1, c'est-à-dire au niveau de la paroi verticale extérieure 6, on note la présence d'un petit capot 10, qui pour fonction de recevoir un lecteur de codes à barres (non représenté) ou tout dispositif équivalent, permettant la lecture des informations présentes sur les flacons de réactifs. Le petit capot 10 est séparé du capot 1 par une paroi verticale 14 en matériau transparent, qui tout en laissant passer le faisceau du lecteur de codes à barres, empêche le passage de l'air circulantau sein du capot 1.

Sur le fond du capot 1, c'est-à-dire sur la partie supérieure de la paroi horizontale inférieure 8, qui est sensiblement plate, sont présents deux déflecteurs d'air 2 et 3 permettant la climatisation, déflecteurs 2 et 3 qui seront décrits ultérieurement en relation avec les figures 2 et 3. Toutefois, sous ces déflecteurs 2 et 3 sont présents des ouvertures 15, non représentées sur cette figure 1, qui sont situées le long du chemin circulaire 4 définies par les parois 6, 7 et 8, ouvertures 15 présentent sous chaque déflecteur 2 et 3 et permettant, d'une part, l'entrée d'air froid selon F1 et, d'autre part, la sortie d'air plus chaud selon F3. L'entrée d'air selon F1 s'effectuant au niveau du déflecteur d'entrée 2 alors que la sortie d'air selon F3 s'effectue au niveau du déflecteur de sortie 3. En ce qui concerne le chemin circulaire 4 de transfert d'air, l'air est mobile selon F2 et transite depuis le déflecteur d'entrée 2 en direction du déflecteur de sortie 3, via bien entendu les ouvertures 15.

Le long du chemin circulaire de transfert d'air 4, le flux d'air qui est donc à la température de conservation des réactifs situés dans le plateau supérieur, ce transfert d'air est référencé F2 et suit ce chemin circulaire 4. Ainsi, le transfert d'air F2 s'effectue selon deux chemins de part et d'autre de l'ouverture centrale 9. On remarque également que la paroi verticale extérieure 6 porte, dans son prolongement supérieur, une rainure circulaire 16 permettant, lorsque l'ensemble est en place dans l'automate, l'étanchéité du chemin circulaire 4 vis-à-vis de l'extérieur et vis-à-vis du plateau situé en position supérieure non représenté sur les figures. Cette étanchéité permet d'éviter que le flux d'air ne vienne en contact avec la partie supérieure des contenants des réactifs, qui est à l'air libre et n'entraîne l'évaporation desdits réactifs.

Si l'on se réfère maintenant à la figure 2, il s'agit d'une vue en coupe selon A-A de la figure 1. Cette figure met bien en exergue l'ensemble des constituants du capot 1, il s'agit donc des parois verticale extérieure 6, parois verticale intérieure 7 et paroi horizontale inférieure 8 qui délimitent le chemin circulaire de transfert d'air 4. La paroi verticale extérieure 6 est surmontée de la rainure circulaire 16 constituant des moyens d'étanchéité 5, lorsque le capot 1 est fixé sous le plateau du support des réactifs de dosage.

La figure 3 est sensiblement identique mais elle représente la coupe B-B sur la figure 1, coupe qui est réalisée au niveau des déflecteurs d'air et plus précisément du déflecteur de sortie d'air référencé 3. A ce niveau, la paroi horizontale inférieure 8 comporte une ouverture 15 située le long du chemin circulaire 4 sous le déflecteur d'air 3. Ce déflecteur d'air 3 est constitué, pour sa part, d'une plaque supérieure 11 ainsi que d'un certain nombre d'entretoises 12, reliant la paroi 8 à la plaque 11. L'espace 13 ainsi créé permet le passage de l'air selon F3 et aussi la régulation du débit que ce soit à l'entrée pour l'autre déflecteur 2 ou pour la sortie au niveau du déflecteur 3. Cette caractéristique permet d'obtenir ainsi lorsqu'on injecte de l'air pulsé au niveau du déflecteur 2, une régulation avec une variation thermique qui est plus faible qu'en l'absence desdits déflecteurs 2 et 3. Ainsi, une utilisation de l'automate, sans la présence de déflecteurs, a montré une différence de température de 5°C entre l'air entrant selon F1 et l'air sortant selon F3. Cette différence n'est plus que de 3°C lorsque les déflecteurs 2 et 3 sont présents. Ceci revient à dire que si la température doit être une température de 14° C, il suffira d'avoir à l'entrée au niveau du déflecteur 2, une température de 12,5 ° C pour obtenir une température de sortie de 15,5° C, ce qui constitue une fourchette de valeur acceptable pour un automate d'analyse biologique selon la présente invention. Dans ce cas, les résultats biologiques sont nettement plus répétitifs et constants.

### REFERENCES

1. Capot du système de réfrigération
2. Déflecteur d'entrée
3. Déflecteur de sortie
4. Chemin circulaire de transfert d'air
5. Moyens d'étanchéité
6. Paroi verticale extérieure
7. Paroi verticale intérieure
8. Paroi horizontale inférieure
9. Ouverture centrale
10. Capot pour lecteur de code à barres
11. Plaque supérieure du déflecteur 2 ou 3
12. Entretoises reliant la paroi 8 à la plaque 11
13. Espace créé par les entretoises 12
14. Paroi verticale transparente
15. Ouverture située le long du chemin circulaire 4 sous le déflecteur d'air 3
16. Rainure circulaire d'étanchéité du chemin circulaire de transfert d'air 4
F1. Entrée d'air froid
F2. Transfert d'air à la température de conservation des produits biologiques
F3. Sortie d'air chaud

## Revendications

1. Système de contrôle de la température au sein d'un automate d'analyse biologique, l'automate comprenant pour l'essentiel :
• des moyens de support, de guidage et de déplacement pas à pas de cuvettes de réaction sur un trajet comprenant un nombre prédéterminé de positions,
• un plateau tournant de support d'échantillons à analyser,
• un plateau tournant de support de réactifs, des moyens de prélèvement de quantités déterminées d'échantillons et de réactifs et d'injection de ces prélèvements dans les cuvettes de réaction,
• des moyens de lavage des cuvettes,
• des moyens de lecture optique des résultats de dosage et un système informatique de commande permettant l'exécution de cycles d'analyse préalablement programmés,
**caractérisé par le fait que** le système de contrôle de la température est associé à la partie inférieure du plateau tournant de support de réactifs de dosage, ledit système comprend en son sein :
• au moins un déflecteur d'entrée (2) d'air,
• au moins un déflecteur de sortie (3) d'air,
• un chemin circulaire de transfert d'air (4) positionné entre le déflecteur d'entrée (2) et le déflecteur de sortie (3), et
• des moyens générant de l'air forcé au niveau du chemin circulaire (4),
ce qui permet de réduire la variation thermique entre les températures d'entrée et de sortie de l'air au sein du système de contrôle de la température.

2. Système, selon la revendication 1, **caractérisé par le fait qu'**il est formé par un capot (1) de forme sensiblement annulaire avec une section en forme de U.

3. Système, selon l'une quelconque des revendications 1 ou 2, **caractérisé par le fait qu'**il est formé par un capot (1) qui possède une paroi verticale extérieure (6), une paroi verticale intérieure (7) et une paroi horizontale inférieure (8), la face supérieure de la paroi horizontale (8) étant sensiblement plane.

4. Système, selon la revendication 3, **caractérisé par le fait que** la paroi horizontale (8) est percée d'au moins deux ouvertures (14 et 15) situées à sensiblement 180° l'une de l'autre le long du chemin circulaire de transfert d'air (4), et que les déflecteurs d'air (2 et 3) sont disposés sur la face supérieure de ladite paroi horizontale (8) au niveau desdites ouvertures (14 et 15).

5. Système, selon l'une quelconque des revendications 1 à 4, **caractérisé par le fait que** chaque déflecteur d'air (2 ou 3) est constitué d'une plaque supérieure (11) et d'au moins une entretoise reliant la paroi horizontale (8) à ladite plaque (11).

6. Système, selon la revendication 5, **caractérisé par le fait que** la plaque supérieure (11) est sensiblement parallèle à la face supérieure de la paroi horizontale (8).

7. Système, selon l'une quelconque des revendications 1 à 6, **caractérisé par le fait que** la partie inférieure du plateau tournant de réactifs de dosage est ajourée et s'étend au sein du système de contrôle de la température.

8. Système, selon la revendication 7, **caractérisé par le fait que** les réactifs de dosage contenus dans des contenants, tels que des bouteilles ou des flacons, ne sont présents qu'au niveau des jours du plateau tournant ajouré.

## Claims

1. A system for temperature control within an automatic biological analyzer, the automatic analyzer essentially comprising:
• support, guidance, and step-by-step transport means for reaction cuvettes on a path comprising a predetermined number of positions,
• a support turntable for analyte samples,
• a support turntable for reactants, means for taking defined quantities of samples and reactants and for injecting the same into the reaction cuvettes,
• means for washing the cuvettes,
• means for optical reading of the determination results and a computerized control system which permits carrying out pre-programmed analysis cycles,
**characterized in that** the temperature control system is connected to the lower part of the support turntable for the determination reactants, said system comprising within itself:
• at least one inlet air deflector (2),
• at least one outlet air deflector (3),
• a circular air transfer path (4) positioned between the inlet deflector (2) and the outlet deflector (3), and
• means for generating circulating air in the circular path (4),
thereby permitting a reduction in the thermal variation between the inlet air and outlet air temperatures within the temperature control system.

2. The system as claimed in claim 1, **characterized in that** it is formed by a cover (1) of substantially annular shape with a U cross section.

3. The system as claimed in either of claims 1 and 2, **characterized in that** it is formed by a cover (1) which has an outer vertical wall (6), an inner vertical wall (7) and a lower horizontal wall (8), the upper side of the horizontal wall (8) being substantially plane.

4. The system as claimed in claim 3, **characterized in that** the horizontal wall (8) is perforated with at least two openings (14 and 15) located substantially at 180° to one another along the circular air transfer path (4) and **in that** the air deflectors (2 and 3) are arranged on the upper side of said horizontal wall (8) over said openings (14 and 15).

5. The system as claimed in any one of claims 1 to 4, **characterized in that** each air deflector (2 or 3) consists of an upper plate (11) and at least one spacer connecting the horizontal wall (8) to said plate (11).

6. The system as claimed in claim 5, **characterized in that** the upper plate (11) is substantially parallel to the upper side of the horizontal wall (8).

7. The system as claimed in any one of claims 1 to 6, **characterized in that** the lower part of the turntable for determination reactants is perforated and extends into the temperature control system.

8. The system as claimed in claim 7, **characterized in that** the determination reactants present in containers, such as bottles or jars, are only present in the openings in the perforated turntable.

## Patentansprüche

1. System zur Temperaturüberwachung innerhalb eines biologischen Analyseautomaten, wobei der Automat hauptsächlich enthält:
• Einrichtungen zum Tragen, Führen und schrittweisen Verschieben von Reaktionsküvetten auf einer Bahn, die eine vorbestimmte Anzahl von Positionen enthält,
• einen Drehteller zum Tragen von zu analysierenden Proben,
• einen Drehteller zum Tragen von Reagentien, Einrichtungen zur Entnahme bestimmter Mengen von Proben und von Reagentien und zur Injektion dieser Entnahmen in die Reaktionsküvetten,
• Einrichtungen zum Waschen der Küvetten,
• Einrichtungen zum optischen Lesen der Dosierergebnisse und ein EDV-Steuersystem, das die Ausführung von vorab programmierten Analysezyklen erlaubt,
**dadurch gekennzeichnet, dass** das Temperaturüberwachungssystem dem unteren Bereich des Drehtellers zum Tragen von Dosier-Reagentien zugeordnet ist, wobei das System in seinem Inneren enthält:
• mindestens ein Eingangs-Luftleitblech (2),
• mindestens ein Ausgangs-Luftleitblech (3),
• einen Lufttransfer-Kreisweg (4), der zwischen dem Eingangs-Leitblech (2) und dem Ausgangs-Leitblech (3) angeordnet ist, und
• Einrichtungen, die in Höhe des Kreiswegs (4) Gebläseluft erzeugen,
was es ermöglicht, die Wärmeschwankung zwischen den Eingangs- und Ausgangstemperaturen der Luft innerhalb des Temperaturüberwachungssystems zu reduzieren.

2. System nach Anspruch 1, **dadurch gekennzeichnet, dass** es von einer im Wesentlichen ringförmigen Kappe (1) mit U-förmigem Querschnitt gebildet wird.

3. System nach einem der Ansprüche 1 oder 2, **dadurch gekennzeichnet, dass** es von einer Kappe (1) gebildet wird, die eine senkrechte Außenwand (6), eine senkrechte Innenwand (7) und eine untere waagrechte Wand (8) besitzt, wobei die Oberseite der waagrechten Wand (8) im Wesentlichen eben ist.

4. System nach Anspruch 3, **dadurch gekennzeichnet, dass** durch die waagrechte Wand (8) mindestens zwei Öffnungen (14 und 15) gebohrt sind, die sich im Wesentlichen in einem Abstand von 180° zueinander entlang des kreisförmigen Lufttransferwegs (4) befinden, und dass die Luftleitbleche (2 und 3) auf der Oberseite der waagrechten Wand (8) in Höhe der Öffnungen (14 und 15) angeordnet sind.

5. System nach einem der Ansprüche 1 bis 4, **dadurch gekennzeichnet, dass** jedes Luftleitblech (2 oder 3) aus einer oberen Platte (11) und aus mindestens einem Abstandshalter besteht, der die waagrechte Wand (8) mit der Platte (11) verbindet.

6. System nach Anspruch 5, **dadurch gekennzeichnet, dass** die obere Platte (11) im Wesentlichen parallel zur Oberseite der waagrechten Wand (8) ist.

7. System nach einem der Ansprüche 1 bis 6, **dadurch gekennzeichnet, dass** der untere Bereich des Drehtellers von Dosier-Reagentien gelocht ist und sich innerhalb des Temperaturüberwachungssystems erstreckt.

8. System nach Anspruch 7, **dadurch gekennzeichnet, dass** die Dosier-Reagentien, die in Behältern wie Flaschen oder Flakons enthalten sind, nur in Höhe der Löcher des gelochten Drehtellers vorhanden sind.
